(19) Europäisches Patentamt
European Patent Office
Office européen des brevets

(11) Veröffentlichungsnummer: **0 266 569 B1**

(12) **EUROPÄISCHE PATENTSCHRIFT**

(45) Veröffentlichungstag der Patentschrift: **06.03.91**

(51) Int. Cl.$^5$: **C09B 29/46**, C09B 31/02, D06P 1/18

(21) Anmeldenummer: **87114498.6**

(22) Anmeldetag: **05.10.87**

# (54) Solventfarbstoffe mit Carbonsäurefunktionen.

(30) Priorität: **09.10.86 DE 3634393**

(43) Veröffentlichungstag der Anmeldung:
**11.05.88 Patentblatt 88/19**

(45) Bekanntmachung des Hinweises auf die Patenterteilung:
**06.03.91 Patentblatt 91/10**

(84) Benannte Vertragsstaaten:
**DE FR GB IT**

(56) Entgegenhaltungen:
**DE-A- 1 954 632**
**FR-A- 848 896**
**FR-A- 1 127 885**
**GB-A- 2 013 232**
**US-A- 2 095 077**

(73) Patentinhaber: **BASF Aktiengesellschaft**
**Carl-Bosch-Strasse 38**
**W-6700 Ludwigshafen(DE)**

(72) Erfinder: **Löffler, Hermann**
**Haydnstrasse 23**
**W-6720 Speyer(DE)**

EP 0 266 569 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Solventfarbstoffe der Formel I

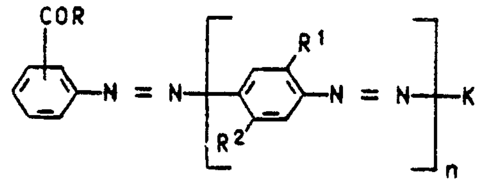 (I),

in der

R den Rest 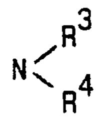 oder $OR^3$, wobei

$R^3$ und $R^4$ gleich oder verschieden sind und jeweils unabhängig voneinander für $C_1$-$C_{22}$-Alkyl, das gegebenenfalls durch Halogen, Pyrrolidino, Piperidino oder Morpholino substituiert oder durch Sauerstoff, Imino oder $C_1$-$C_4$-Alkylimino unterbrochen ist, stehen,
$R^1$ und $R^2$ gleich oder verschieden sind und jeweils unabhängig voneinander Wasserstoff, Methyl, Ethyl, Methoxy oder Ethoxy,
n die Zahl 1 und
K einen Rest der Formel

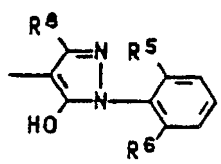

bedeuten, worin
$R^5$ und $R^6$ gleich oder verschieden sind und jeweils unabhängig voneinander für Wasserstoff, Methyl, Methoxy, Chlor oder Brom und
$R^8$ für den Rest $CONHR^3$ oder $COOR^4$ stehen, wobei $R^3$ und $R^4$ jeweils die oben genannte Bedeutung besitzen,
mit der Maßgabe, daß der Rest COR mehr als 8 Kohlenstoffatome aufweist und daß einer der Reste $R^3$ oder $R^4$ verzweigt ist.

Aus der GB-A-2013232 sind Disazofarbstoffe bekannt, die eine heterocyclische Kupplungskomponente aus der Hydroxypyridonreihe aufweisen. Ein Hinweis, anstelle der Pyridone auch Phenylpyrazolone als Kupplungskomponente zu verwenden, ist nicht gegeben.

Weiterhin beschreibt die FR-A-1 127 885 u.a. solche Monoazofarbstoffe, deren Kupplungskomponenten aus der Phenylpyrazolonreihe stammen.

Alle in der obengenannten Formel 1 auftretenden Alkylreste können sowohl geradkettig als auch verzweigt sein.

Einzelne Reste $R^3$ und $R^4$ sind beispielsweise: $CH_3$, $C_2H_5$, $C_3H_7$-(n), $CH(CH_3)_2$, $C_4H_9$-(n), $CH_2$-$CH(CH_3)_2$, $CH(CH_3)C_2H_5$, $C_4H_8Cl$, $C(CH_3)_3$, $CH_2$-$CH(CH_3)OCH_3$, $C_5H_{11}$-(n), $CH(CH_3)CH(CH_3)_2$, $CH(C_2H_5)_2$, CH(CH3)-C3H7, CH(CH3)CH(C2H5)2, C2H4CH(CH3)2, CH(CH3)C2H4OCH3, $CH_2CH(C_2H_5)_2$, $C(C_2H_5)(CH_3)_2$, $C_2H_4OC_3H_7$, $C_6H_{13}$-(n), $C_2H_4OC_4H_9$, $C(CH_3)(C_2H_5)_2$, $C_2H_4CH(CH_3)_2$, $C_7H_{15}$, $CH(C_2H_5)$-$C_4H_9$, $CH(C_3H_7)_2$,

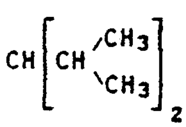, $CH(CH_3)C_2H_4CH(CH_3)_2$, $CH(CH_3)CH_2OCH_2CH(CH_3)_2$, $C_8H_{17}$-(n),

$CH_2CH(C_2H_5)C_4H_9$, $CH(CH_3)C_3H_6CH(CH_3)_2$, $CH_2CH(CH_3)CH_2OC(CH_3)_3$, $C_4H_8OC(CH_3)_3$, $CH(CH_3)$-

$CH_2OC_5H_{11}$, $CH(C_2H_5)CH_2OCH(CH_3)C_2H_5$, $CH(C_2H_5)CH_2OCH_2CH(CH_3)_2$, $CH(C_2H_5)CH_2OC(CH_3)_3$, $CH(C_3H_7)CH_2OC_3H_7$, $C(CH_3)(C_2H_5)(C_4H_9)$, $C_9H_{19}$-(n), $C_9H_{19}$-(i), $CH_2CH(CH_3)C_6H_{13}$, $C_{10}H_{21}$-(n), $C_{10}H_{21}$-(i), $C_2H_4OCH_2CH(C_2H_5)C_4H_9$, $CH(C_4H_9)CH_2OCH(CH_3)_2$, $CH_2CH(C_3H_7)C_5H_{11}$, $CH(CH_3)CH_2OCH_2CH(C_2H_5)C_4H_9$, $CH_2CH(CH_3)OCH_2CH(C_2H_5)C_4H_9$, $C_3H_6OCH_2CH(C_2H_5)C_4H_9$, $C_{13}H_{27}$-(i)

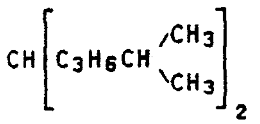 , $C_{14}H_{29}$, $C_{15}H_{31}$, $C_{16}H_{33}$, $C_{17}H_{35}$, $C_{18}H_{37}$, $C_{19}H_{39}$, $C_{20}H_{41}$,

$C_{21}H_{43}$, $C_{22}H_{45}$, $C_2H_4N(CH_3)_2$, $C_2H_4N(C_2H_5)_2$, $C_3H_6N(CH_3)_2$, $C_3H_6N(C_2H_5)_2$,

$C_2H_4N(C_4H_9)_2$, 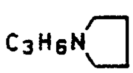 oder 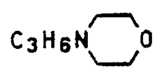 .

Die neuen Solventfarbstoffe der Formel 1 sind, abhängig von den Substituenten, flüssig, kristallin oder auch harzartig und zeichnen sich durch eine hohe Löslichkeit in organischen hydroxylgruppenhaltigen Lösungsmitteln, wie Alkoholen, Glykolen oder Glykolethern, sowie in Estern, Ketonen, Aliphaten, langkettigen aliphatischen Carbonsäuren und Aromaten aus.

Daher eignen sich die erfindungsgemäßen Farbstoffe vorteilhaft zum Färben polymerer Massen, wie Cellulose-2-, - 1/2- oder -triacetat. Insbesondere sind unter polymeren Massen solche zu verstehen, die als filmbildende, farbtragende Polymere die Oberflächen von Papier, Holz, Glas, Aluminium oder Kunststoff veredeln oder mit deren Hilfe vorzugsweise im FlexodruckVerfahren Oberflächen bedruckt werden. Es sind dies beispielsweise Nitro-oder Ethylcellulose, Polyvinylchlorid, Polyvinylbutyral, Schellack, mit Phenol-Formaldehydharzen modifiziertes Collophonium, Polyamidharze, Kondensate des Formaldehyds mit Harnstoff und Helamin oder Polyacrylsäureharze.

Ein weiteres Anwendungsgebiet liegt in der Färbung von Farbbändern in Schreib- und Druckgeräten. Eine sehr hohe Löslichkeit in schwer- oder nichtflüchtigen und physiologisch unbedenklichen Lösungsmitteln wie Phenylglykol oder Ölsäure ist hierfür Voraussetzung.

Die Färbungen zeichnen sich durch sehr gute Wasserechtheit und gute Nahrungsmittelechtheit aus, wobei sie eine Lichtechtheit aufweisen, die der von schwermetallhaltigen Komplexsäuren nahekommt oder sie gar erreicht.

Mit erfindungsgemäßen Farbstoffen gefärbte Farbbänder und die damit erzeugte Schrift sind hoch sublimationsecht.

Diejenigen Farbstoffe, die basische Gruppen enthalten sind in essigsaurer Lösung auch sehr gut zur Massefärbung von Papier geeignet und weisen eine hohe Substantivität auf.

Technisch besonders wertvoll sind Farbstoffe oder Farbstoffgemische der Formel II

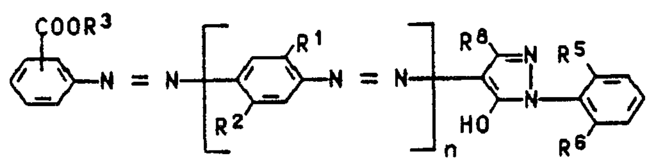 (II),

in der $R^8$ den Rest $CONHR^3$ oder $COOR^4$ bedeutet und $R^1$, $R^2$, $R^3$, $R^4$, $R^5$, $R^6$ und n jeweils die obengenannte Bedeutung besitzen, mit der Maßgabe, daß einer der Reste $R^3$ oder $R^4$ verzweigt ist.

Farbstoffgemische erhält man beispielsweise dann, wenn die Ester- oder Amidgruppen in den Ausgangskomponenten der Farbstoffe der Formel II von Alkohol- oder Amingemischen stammen, wie sie aus der Hydroformylierung von Alkenen durch Hydrierung oder hydrierende Aminierung erhalten werden.

Von besonderer Bedeutung sind die Farbstoffe der Formel III

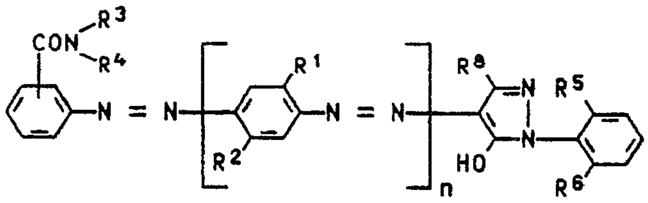

(III),

in der $R^8$ den Rest $CONHR^3$ oder $COOR^4$ bedeutet und $R^1$, $R^2$, $R^3$, R, $R^5$, $R^6$ und n jeweils die obengenannte Bedeutung besitzen, mit der Maßgabe, daß einer der Reste $R^3$ oder $R^4$ verzweigt ist.

Ganz besonders bevorzugt sind dabei solche Farbstoffe der Formel II und III, in der einer der Reste $R^3$ oder $R^4$ durch Imino, insbesondere $C_1$-$C_4$-Alkylimino unterbrochen ist.

Besonders bevorzugt sind Solventfarbstoffe der Formel II oder III, wobei

| | |
|---|---|
| $R^1$ | Wasserstoff, Methyl oder Methoxy, |
| $R^2$ | Methyl oder Methoxy, |
| $R^3$ und $R^4$ | $C^1$-$C_{22}$-Alkyl, |
| $R^5$ | Wasserstoff oder Methyl, |
| $R^6$ | Chlor und |
| $R^8$ | $COOCH_3$, $COOC_2H_5$, $CONHR^9$ oder $CON(R^9)_2$ bedeuten, wobei |
| $R^9$ | für $C_4$-$C_8$-Alkyl das gegebenenfalls durch $C_1$-$C_4$-Alkylimino |

unterbrochen ist, steht.

Da die Kristallisationstendenz der Farbstoffe bei ihrer Bildung häufig sehr gering ist, sind Maßnahmen zur Kristallkeimbildung förderlich, wie etwa starke Kühlung, Reiben oder ein Zusatz von Impfkristallen.

Die folgenden Beispiele sollen die Erfindung näher erläutern. In ihnen beziehen sich die Angaben über Prozente, sofern nichts anders vermerkt, auf das Gewicht.

Beispiel 1

36 g 4-Aminobenzoesäure-N,N-di(2-ethylhexyl)amid wurden in 100 g Ölsäure gelöst und bei 10/15 °C zunächst mit 50 ml 30 %iger Salzsäure, dann 30 ml 3,33 normaler, wässriger Natriumnitritlösung versetzt und drei Stunden bei 10/15 °C gerührt. Man zerstörte nun die überschüssige salpetrige Säure mit etwas Aminosulfonsäure und ließ dann das Diazotierungsgemisch in die Lösung von 13,7 g p-Kresidin in 100 ml Wasser und 10 ml 30 %iger Salzsäure einfließen, Nach Zusatz von 50 g Phenylglykol und Natriumacetat bis sich ein pH-Wert von 1,5 ergab, wurde die Kupplung bei 40 °C zu Ende geführt. Der nach einer Phasentrennung verbleibenden organischen Phase wurden 50 ml einer 30 %igen Salzsäure und bei 0/10 °C allmählich 30 ml einer 3,33 normalen, wässrigen Natriumnitritlösung zudosiert. Nach einstündigem Rühren bei 5/10 °C wurde der Überschuß an salpetriger Säure entfernt und das Diazotierungsgemisch mit 26,6 g 1-(2-Chlor-6-methylphenyl)-5-hydroxy-pyrazol-3-carbonsäuremethylester versetzt. Pufferung bis zum pH-Wert von 3 mit Natriumacetat beendete die Kupplung. Nach Phasentrennung und dreimaligem Ausrühren der organischen Phase mit Wasser wurde die Farbstofflösung unter vermindertem Druck bei 50 °C getrocknet und mit einer Mischung aus Ölsäure/Phenylglykol (2:1) auf einen Farbstoffgehalt von 30 % eingestellt. Die Lösung enthielt die Farbstoffe

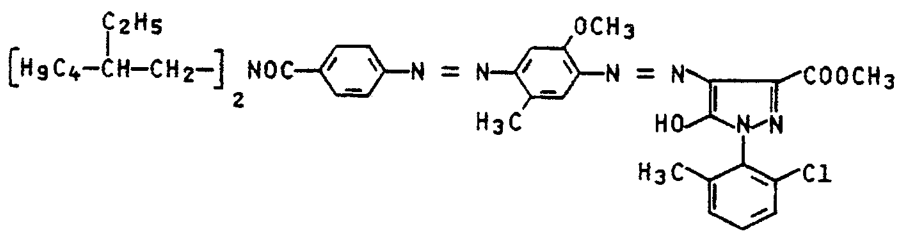

~ 90 %
rot

neben

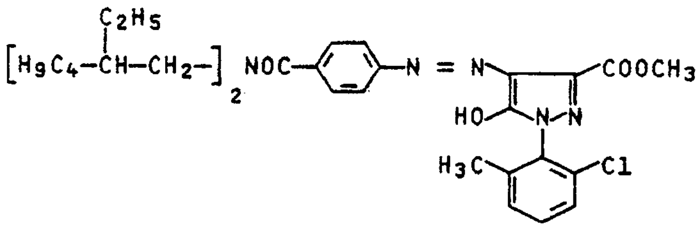

~ 10 %
gelb

Sie ist zur Rotfärbung von Farbbändern für Schreibgeräte sehr gut geeignet.

Die Farbstoffe der folgenden Tabelle besitzen ein sehr ähnliches Eigenschafts- und Anwendungsspektrum. Sofern sie basische Gruppen tragen sind sie auch zur Massefärbung von Papier geeignet.

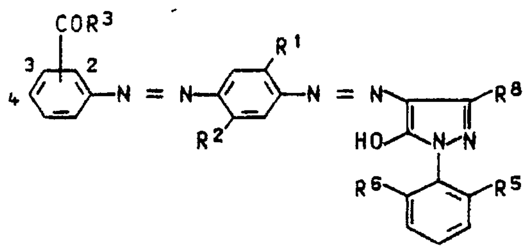

| Beisp.-Nr. | $R^3$ | $R^1$ | $R^2$ | $R^8$ | $R^5$ | $R^6$ | Farbton |
|---|---|---|---|---|---|---|---|
| ~~44~~ | ~~4-N[$C_4H_9$-(n)]$_2$~~ | ~~$CH_3$~~ | ~~$CH_3$~~ | ~~$COOCH_3$~~ | ~~Cl~~ | ~~$CH_3$~~ | ~~orange~~ |
| 2 | 2-$OC_{10}H_{21}$-(i) | $CH_3$ | $CH_3$ | $COOCH_3$ | Cl | $CH_3$ | orange |
| ~~46~~ | ~~4-N[$C_4H_9$-(n)]~~ | ~~$CH_3$~~ | ~~$CH_3$~~ | ~~$CH_3$~~ | ~~Cl~~ | ~~$CH_3$~~ | ~~orange~~ |
| ~~47~~ | ~~4-N[$C_6H_{13}$-(n)]$_2$~~ | ~~$CH_3$~~ | ~~$CH_3$~~ | ~~$COOCH_3$~~ | ~~Cl~~ | ~~$CH_3$~~ | ~~orange~~ |
| 3 | 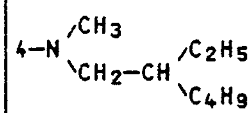 | $CH_3$ | $CH_3$ | $COOCH_3$ | Cl | $CH_3$ | orange |
| 4 | 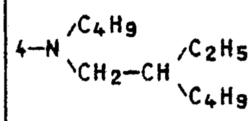 | $OCH_3$ | $CH_3$ | $COOCH_3$ | Cl | $CH_3$ | rot |
| 5 | 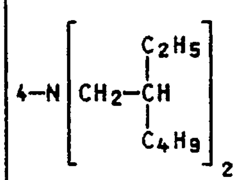 | $CH_3$ | $CH_3$ | $COOCH_3$ | Cl | H | orange |
| 6 | 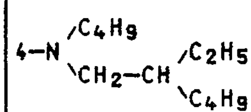 | $OCH_3$ | $CH_3$ | $COOCH_3$ | Cl | $CH_3$ | rot |
| 7 | 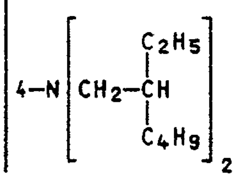 | $OCH_3$ | $OCH_3$ | $COOCH_3$ | Cl | $CH_3$ | violett |

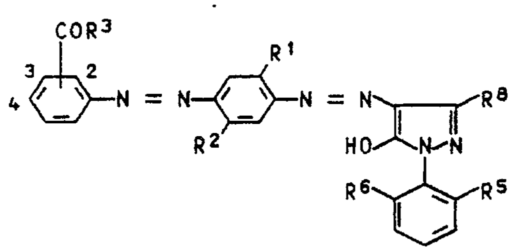

| Beisp.-Nr. | $R^3$ | $R^1$ | $R^2$ | $R^8$ | $R^5$ | $R^6$ | Farbton |
|---|---|---|---|---|---|---|---|
| ~~53~~ | ~~$4-N[C_2H_5]_2$~~ | ~~$CH_3$~~ | ~~$CH_3$~~ | ~~$CONH-C_3H_6-N(C_2H_5)_2$~~ | ~~Cl~~ | ~~$CH_3$~~ | ~~orange~~ |
| ~~8~~ | ~~$4-N[C_4H_9-(n)]_2$~~ | ~~$CH_3$~~ | ~~$CH_3$~~ | ~~$CONH-C_3H_6-N(C_2H_5)_2$~~ | ~~Cl~~ | ~~$CH_3$~~ | ~~orange~~ |
| 9 | $4-N[C_4H_9-(n)]_2$ | $OCH_3$ | $OCH_3$ | $CONH-C_2H_4-N(CH_3)_2$ | Cl | $CH_3$ | violett |
| 10 | $4-N[C_4H_9-(n)]_2$ | $CH_3$ | $CH_3$ | $CONH-C_3H_6-$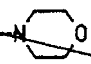 | Cl | $CH_3$ | orange |
| ~~11~~ | ~~$4-N[C_4H_9-(n)]_2$~~ | ~~$CH_3$~~ | ~~$CH_3$~~ | ~~$CONH-C_2H_4-N(CH_3)_2$~~ | ~~Cl~~ | ~~$CH_3$~~ | ~~orange~~ |
| ~~12~~ 8 | $2-OCH_2-CH\langle^{C_2H_5}_{C_4H_9}$ | $CH_3$ | $CH_3$ | $CONH-C_3H_6-N(C_2H_5)_2$ | Cl | $CH_3$ | orange |

## Ansprüche

1. Solventfarbstoffe der Formel I

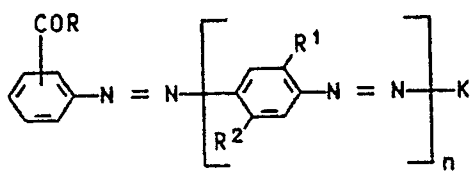

(I),

in der

R den Rest $N\langle^{R^3}_{R^4}$ oder $OR^3$, wobei

$R^3$ und $R^4$ gleich oder verschieden sind und jeweils unabhängig voneinander für $C_1$-$C_{22}$-Alkyl, das gegebenenfalls durch Halogen, Pyrrolidino, Piperidino oder Morpholino substituiert oder durch Sauerstoff, Imino oder $C_1$-$C_4$-Alkylimino unterbrochen ist, stehen,
$R^1$ und $R^2$ gleich oder verschieden sind und jeweils unabhängig voneinander Wasserstoff, Methyl, Ethyl, Methoxy oder Ethoxy,
n die Zahl 1 und
K einen Rest der Formel

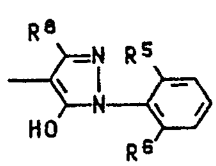

bedeuten, worin
$R^5$ und $R^6$ gleich oder verschieden sind und jeweils unabhängig voneinander für Wasserstoff, Methyl, Methoxy, Chlor oder Brom und

$R^8$ für den Rest $CONHR^3$ oder $COOR^4$ stehen, wobei $R^3$ und $R^4$ jeweils die oben genannte Bedeutung besitzen, mit der Maßgabe, daß der Rest COR mehr als 8 Kohlenstoffatome aufweist und daß einer der Reste $R^3$ oder $R^4$ verzweigt ist.

**2.** Verwendung der Solventfarbstoffe gemäß Anspruch 1 zum Färben organischer Substrate.

## Claims

**1.** A solvent dye of the formula I

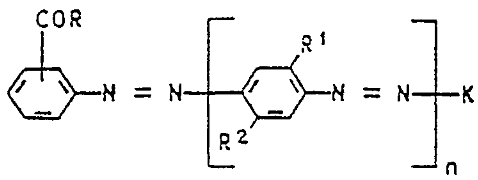

(I)

where

R is 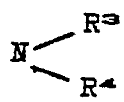 or $OR^3$,

$R^3$ and $R^4$ being identical or different and each being independently of the other $C_1$-$C_{22}$-alkyl which may be substituted by halogen, pyrrolidino, piperidino or morpholino or interrupted by oxygen, imino or $C_1$-$C_4$-alkylimino, $R^1$ and $R^2$ are identical or different and each is independently of the other hydrogen, methyl, ethyl, methoxy or ethoxy,
n is 1 and
K is a radical of the formula

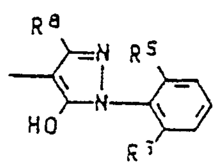

where
$R^5$ and $R^6$ are identical or different and each is, independently of the other, hydrogen, methyl, methoxy, chlorine or bromine and $R^8$ is $CONHR^3$ or $COOR^4$, $R^3$ and
$R^4$ each having the abovementioned meanings, subject to the proviso that COR has more than 8 carbon atoms and that either $R^3$ or $R^4$ is branched.

**2.** The use of a solvent dye as claimed in claim 1 for coloring organic substrates.

## Revendications

**1.** Colorants à solvant de formule I

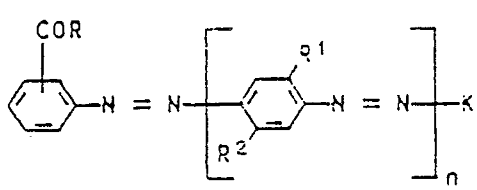

(I),

dans laquelle

R représente le reste 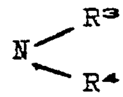 ou $OR^3$ , où

$R^3$ et $R^4$ sont identiques ou différents et sont, indépendamment l'un de l'autre, chacun un groupement alkyle en $C_1$-$C_{22}$ qui est éventuellement substitué par des radicaux halogéno, pyrrolidino, pipéridino ou morpholino ou interrompu par de l'oxygène ou un groupement imino ou alkylimino en $C_1$-$C_4$,
$R^1$ et $R^2$ sont identiques ou différents et sont, indépendanment l'un de l'autre, chacun un atome d'hydrogène ou un groupement méthyle, éthyle, méthoxy ou éthoxy,
n vaut 1 et
K représente un reste de formule

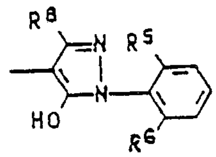

dans laquelle
$R^5$ et $R^6$ sont identiques ou différents et sont, indépendamment l'un de l'autre, chacun un atome d'hydrogène ou un radical méthyle, méthoxy, chloro ou bromo, et
$R^8$ est mis pour les restes $CONHR^3$ ou $COOR^4$, où $R^3$ et $R^4$ ont chacun la signifcation donnée précédemment, pourvu que le reste COR ait plus de 8 atomes de carbone et que l'un des restes $R^3$ et $R^4$ soit ramifié.

**2.** Utilisation des colorants à solvant selon la revendication 1, pour colorer des substrats organiques.